(19) Europäisches Patentamt
European Patent Office
Office européen des brevets

(11) EP 1 302 229 B2

(12) NEW EUROPEAN PATENT SPECIFICATION
After opposition procedure

(45) Date of publication and mention
of the opposition decision:
07.01.2015 Bulletin 2015/02

(45) Mention of the grant of the patent:
03.08.2005 Bulletin 2005/31

(51) Int Cl.:
B01D 39/16 (2006.01)     B01D 46/02 (2006.01)

(21) Application number: 02022934.0

(22) Date of filing: 10.10.2002

(54) **Bag filters**

Filtertaschen

Manches filtrantes

(84) Designated Contracting States:
AT BE BG CH CY CZ DE DK EE ES FI FR GB GR
IE IT LI LU MC NL PT SE SK TR
Designated Extension States:
AL LT LV MK RO SI

(30) Priority: 12.10.2001 JP 2001315785

(43) Date of publication of application:
16.04.2003 Bulletin 2003/16

(73) Proprietor: TOYOBO CO., LTD.
Osaka-shi
Osaka 530-8230 (JP)

(72) Inventor: Sugiyama, Hirofumi,
Toyo Boseki Kabushiki Kaisha
Osaka-shi,
Osaka (JP)

(74) Representative: Vossius & Partner
Siebertstrasse 4
81675 München (DE)

(56) References cited:
EP-A- 0 916 379          JP-A- H05 269 320
JP-A- 2000 354 714     JP-U- H07 510
JP-U- H0 639 113

• DATABASE WPI Week 199113, 13 February 1991
(1991-02-13) Derwent Publications Ltd., London,
GB; AN 1991-089575 XP002257215 ITAYA
MASAYUKI: "Fabric for filter bag" & JP 03 032711
A (TOYO BOSEKI), 13 February 1991 (1991-02-13)

EP 1 302 229 B2

**Description**

The present invention relates to a bag filter used in dust collectors for dust-containing gases containing solid particles, and more particularly, it relates to a bag filter with improved strength and durability, particularly in its sewn portion, when used for a long period, thereby making it possible to endure use for a long period.

The operation of separating solid particles (dust) from dust-containing gases containing solid particles have hitherto been carried out in various places. The dust-collecting equipment for this purpose may include those of various types, which are roughly classified into power-driven dust collectors, inertial dust collectors, centrifugal dust collectors, washing dust collectors, filter dust collectors, and electrostatic dust collectors. Among these dust collectors, electrostatic dust collectors have often been used so far for municipal refuse incinerators and industrial waste incinerators. In this system, however, the dust collection efficiency is the best around 300°C, at which temperature the formation (resynthesis) of dioxins may occur and therefore the gas temperature at the inlet of duct collectors is required to 200°C or lower according to the Waste Management Law. Under such an influence, filter dust collectors can have many merits, even in this field, such as high dust collection and filtration efficiency, relatively inexpensive in equipment cost and relatively low dependence of dust efficiency on temperatures, and bag filters have become favored. EP 0 916 379 discloses a bag filter for large-sized incinerators, using a filter material containing a polycyanoaryl ether.

The important part of these filter dust collectors is a bag filter, and a fabric or a felt material is used for its filter cloth. In particular, because of a decrease in exhaust concentration, a reduction in filtration area by replacement of an electrostatic dust collector, or acceleration, the use of a felt material has been increased. Further, in dust collectors with a bag filter system, soot and dust attached to the bag filter are shaken off using an intermittent shaking off equipment with a mechanical vibration or back draft system, thereby prolonging the period for use of the filter and achieving high collection efficiency and air permeability.

The bag filter is prepared by cutting the felt material into a prescribed size and sewing the overlapped long side portions, and is fitted in a retainer via an attachment cloth (adapter) so that the bag filter can make shape retaining in a cylindrical state.

When the source of the bag filter breakage was examined, it was found that the sewn portion has also a problem, although it greatly depends on the quality, components, areal density and physical properties of a felt material of the bag filter; and refuse to be incinerated, incineration equipment, dust generating source or equipment; and the kinds, temperature, chemical properties and amounts of exhaust gases and dusts generated thereby; and the structure, shape and operating conditions of the dust collector and the bag filter. In the pulse jet shaking off in which a bag is sewn in a cylindrical shape and compressed air is blown from the upper part of the bag to effect dust shaking off operation, the sewn portion may cause hole opening by repetition for a long period so that the leakage of dust from the sewn portion can be found, or the sewn portion may also be lead to breakage for a further long period. In the case of a bag filter for furnace gas expander power generation in which the gas generated from the furnace top in the steel making step is used for power generation, the back washing method is employed for the dust shaking off system. Since the bag filter for furnace gas expander power generation is used at high temperatures under high pressure for increasing the efficiency of power generation and the dust shaking off operation is carried out by the back washing method, a very large load may be imposed on the bag filter at the time of filtrating operation or shaking off operation by the back washing method; therefore, some problems have been seen in that the sewn portion, which appears to be weakest, may cause gradual distortion to allow dust leakage or may be led to breakage. When measures are taken to increase the strength of the sewn portion, including making the overlapped portion larger or making sewing pitch too much close, that portion may easily be deformed and the degree of shaking off per bag may be deteriorated, thereby making it possible that an increase in pressure loss may be caused or the dust leakage for the deformed portion may occur.

An object of the present invention is to provide a bag filter which can endure use for a long period by improving the strength and durability of the bag filter, particularly in its sewn portion, which is continuously operated at high temperatures for a long period, such as in the incinerator for municipal refuse and industrial waste, to filter dust-containing gases.

Thus the present invention provides a bag filter comprising a felt material with an areal density of 400 g/m$^2$ or more, which felt material is prepared by bonding a short fiber web composed mainly of polyarylene sulfide fibers with a scrim and is sewn into a cylindrical shape having a diameter of 120 mm to 380 mm, a margin to seam being 2% to 8% of the bag circumference, and at least five yarns of the scrim in either one of warp and weft directions being incorporated by sewing into the entire sewn portion of the margin to seam.

The sewn portion comprises at least three lines of sewing at an interval of 2 mm or more.

In a preferred embodiment, the sewing lines are substantially parallel to the center line of the cylindrical shape of the bag filter.

In a preferred embodiment, the sewing yarns are composed substantially of fluorocarbon fibers or polyarylene sulfide fibers.

Figure 1 is a schematic view showing the bag filter of the present invention.
Figure 2 is a schematic view showing the sewn portion of the bag filter of the present invention: (a) super imposed seam and (b) fell seam.
Figure 3 is a schematic view of a sample to be subjected to the measurement of strength in the present invention.

The polyarylene sulfide as the main components of the felt material of the present invention refers to a polymer containing -R-S groups (wherein R is phenylene, biphenylene, naphthalene, biphenylene ether, or a $C_1$-$C_6$ lower alkyl substituted derivative thereof) as repeating units, which polymer is obtained by reacting a polyhalogen substituted cyclic compound having an unsaturated group between the adjacent ring atoms with an alkali metal sulfide in an organic polar solvent. As typical examples, there can be used, for example, those which are detailed in the U.S. Patent No. 3,354,129; however, all falling into the category of polyarylene sulfides can be included in the present invention. In the present invention, particularly preferred is polyphenylene sulfide (hereinafter referred to as PPS) with R being phenylene.

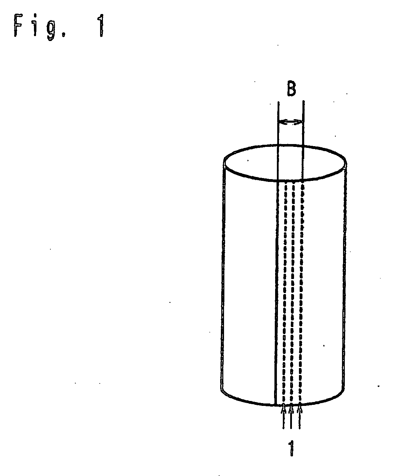

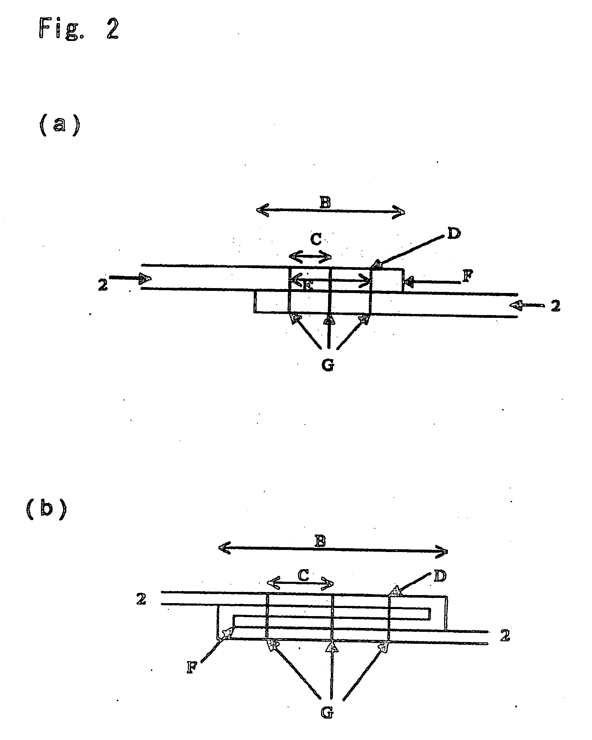

The felt material of the bag filter of the present invention should be prepared by bonding a short fiber web with a scrim and have an areal density of 400 g/m$^2$ or more. The areal density of the felt material is an important factor to determine the performance of a bag filter, such as permeability, filtration rate and filtration efficiency. When the areal density is too high, the weight of a bag filter with the same surface area becomes large, which causes, in addition to high cost, the dimensional change with time of the felt material, a failure in shaking off dust, or easy extension (creep) at high temperatures, all of which are not preferred. To improve the filtration performance as the measures to tighten the environmental standards, it is important to increase an areal density, and the felt material used in the present invention has an areal density of 400 g/m$^2$ or more. Although the more preferred areal density is 500 g/m$^2$ or more, other problems will occur when the areal density is too much increased as described above; therefore, a felt material with a necessary areal density for the required performance is used. Then, the margin to seam of a bag filter having a diameter of 120 mm to 380 mm, which is prepared by sewing a felt material 2 in a cylindrical shape as shown in Figure 1 is 2% to 8% of the bag circumference. The margin B to seam (G) as used herein refers to the states of Figures 2(a) and 2(b) for super imposed seam and fell seam, respectively (Reference sign F denotes the end of the felt). When the overlapped portion has the same width, the margin B to seam (G) for fell seam is about twice the margin to seam for super imposed seam. For a relatively thick felt material, super imposed seam is recommended; however, the present invention is not limited thereto. For other ways of sewing, the margin to seam is shown similarly, and the margin to seam is basically the same on the front and back side for symmetric seam such as super imposed seam and fell seam, but refer to the smaller one for asymmetric seam such as lapped seam (even for symmetric seam, when there is a difference between the front cloth and the back cloth, the margin to seam refers to the smaller one). In general, in the system of collecting dust in the inside of a cylindrical shape and applying a back wash pressure from the outside of the cylindrical shape for shaking off the dust, such as back wash bag filters, the stress applied to the cylindrical shape (felt material and sewn portion) becomes increased in proportion to the diameter and pressure with an increase in the diameter of the cylindrical shape (bag filter); therefore, both the felt material and the sewn portion should be made strong. In the back washing method as described above, the strength of the sewn portion should be increased to prevent the slip breakage of the sewn portion (the sewn portion is broken by allowing sewing yarns to come off the cotton portion, while the yarns of a scrim are remaining). To increase the strength of the sewn portion to prevent the slip breakage, it is achieved by widening that the margin to seam, increasing the number of sewing lines, or using sewing yarns having high strength. However, when the margin to seam is widen too much, some problems will occur; for example, the air permeability of the sewn portion overlapped is decreased, whereby the effective filtration area is reduced thereby and the sewn portion becomes stiff so that when vibration is applied to that portion in the dust shaking off operation, stress is concentrated to that portion, instead resulting in breakage from that portion. As the result of various studies, it has been found that the margin to seam at the bonded faces of the sewn portion of a bag filter having a diameter of 120 mm to 380 mm should be 2% to 8% of the bag circumference. When the margin to seam is less than 2%, the sewn portion will easily be broken. When the margin to seam is more than 8%, the above problem will become tangible. The preferred margin to seam is 4% to 6% of the bag circumference.

The strength of the sewn portion is higher when more yarns of a scrim are contained between the sewing yarn lines in the margin to seam. It is desirable that 5 or more warps, preferably 8 to 16 warps, are contained. This is because less than 5 warps will easily cause the slip breakage of the sewn portion.

Then, the sewn portion contains 3 or more lines of sewing yarns 1 at an interval C of 2 mm or more. In Fig. 2(a), reference sign E denotes the sewn portion, and reference numeral D denotes the outermost sewing line. When short fibers are integrated by the needle punching method or water punching method with a roughly woven scrim for bag filters, the strength of the sewn portion not only depends on the constitution of the sewn portion but also on the intertwining strength of the short fibers as well as the intertwining strength of the scrim and the short fibers. Even if the arrangement of the short fiber web is improved or the areal density is increased, hole opening will easily occur for only a web because it receives physical fatigue such as by shaking off operation at high temperatures of about 200°C, which may result in the leakage of dust and further the slip breakage from the cotton portion. Therefore, the strength of the sewn portion greatly depends on, in addition to the increased strength of yarns or the increased number of sewing lines, how many warps of the scrim intertwining with the short fibers have been incorporated or sewn into the sewn portion. The strength is more increased by making the weaving density of the scrim higher, which leads, however, to an increase in cost. The preferred scrim may contain about 8 to 40 yarns/2.54cm (warps/inch) for 200 to 120 dtex, although it also depends on the thickness and physical properties of yarns and further the required characteristics. In addition, wider intervals of sewing and a greater number of sewing lines are preferred; however, too much increase in these factors will cause the same problems as described above.

The overlapping of margins to seam may include various ones, such as super imposed seam as shown in Figure 2(a); fell seam in which both end portions are folded as shown in Figure 2(b); lapped seam in which only one end portion is folded; welt seam, opening seam, top stitched seam, butted seam, and french seam. From the viewpoints of seam strength and slidability, super imposed seam and fell seam are preferred.

The stitch may include various ones, such as lock stitch, chain stitch, double stitch, over-edge chain stitch, and zigzag stitch. From the viewpoints of seam strength and slidability, lock stitch is the most preferred. The number of stitches may vary with the way of sewing, the stitch, the thickness and strength of sewing yarns, and the felt material, but may preferably be about 5 to 20 per 3 cm to secure the strength and durability of the sewn portion according to the present invention.

The bag filter is subjected to dust removal treatment such as by the pulse jet method or back washing method to remove dust attached. In each case, the bag filter is used so that a load is imposed in the longitudinal direction of a scrim at high temperatures. In the bag filter of the present invention, it is important that the warps of a scrim are substantially parallel to the center line of the cylindrical shape of the bag filter with the wefts being perpendicular thereto and that the sewing line is substantially parallel to the center line of the cylindrical shape of the bag filter and the warps of the scrim. For example, it has been found that the strength at 15 degrees or more of a biaxial fabric consisting of warps and wefts at right angles to each other, even if the warps and wefts have the same physical properties, thickness, and density, is only 5% to 15% of the strength in the warp and weft directions. Since a felt material has been reinforced with short fibers, the strength is slightly increased, depending on the orientation of the short fibers, in which case it is, however, only about 5% to 25% of the strength. When a load is imposed in the bias direction, the degree of deformation for a scrim becomes large, thereby causing the occurrence of very large extension. Therefore, the "substantially parallel" and "perpendicular" as used herein refer to a bag filter with a deviation of 10 degrees or less from the center line and the direction perpendicular thereto, respectively, in the state of use (vertically hanging state) and with a regular shape by visual observation.

When the strength of the sewn portion is low, the sewn portion may cause the slip breakage from the scrim or the sewing yarns are ruptured to break filter cloth by long-term fatigue through the shaking off operation. Therefore, in the evaluation by incorporation of the sewn portion into the grip gap in the tension test, it is better that the sewn portion has a higher strength, more preferably a strength equal to or higher than that of the felt material (the felt portion will be first ruptured).

The sewing yarns 1 used in the sewing of a bag filter should have heat resistance, chemical resistance, and durability, as well as high strength and thermostability including shrinkage. In the present invention, the sewing yarns may preferably be composed substantially of fluorocarbon fibers or polyarylene sulfide fibers such as polyphenylene sulfide fibers. The fluorocarbon fibers may be fibers, 90% or higher of which have one or more fluorine atoms on the main chain or side chain with a higher ratio of fluorine atoms being preferred. In particular, tetrafluoroethylene (PTFE) fibers are preferred. The PTFE fibers may include Profilen (registered trademark) available from Lenzing. If desired, they may be combined with other fibers, but it is desirable that fluorocarbon fibers are contained at 50% or more. The polyphenylene sulfide fibers are fibers made of a polymer containing p-phenylene sulfide ($-C_6H_4-$) units, more specifically fibers made of a linear polymer containing p-phenylene sulfide repeating units at 70 wt% or more, more preferably 90 wt% or more. The polyphenylene sulfide fibers may include PROCON (registered trademark) available from Toyo Boseki Kabushiki Kaisha. For the other fibers, polyimide fibers such as P84 available from Inspec Fibers are used. The sewing yarns may be those prepared by applying primary twist to the above-described multifilament, combining 2 or 3 of them, and applying final twist thereto, or those prepared by combining long fibers and short fibers. The thickness of sewing yarns is selected under appropriate conditions, depending on their quality and physical properties, as well as the way of sewing, the stitch, the number of stitches, and the felt material.

For the felt material in the bag filter of the present invention, when used in the filtration at high temperatures and in the presence of strong acids and strong alkalis, such as in the municipal refuse incinerators and industrial waste incinerators, polyphenylene sulfide fibers, aramid fibers, polyimide fibers, fluorocarbon fibers, and glass fibers are used alone or as their combined fibers. In the case of polyphenylene sulfide fibers, these fibers may be used in either a scrim or short fibers, or both in combination or admixture, depending on the use and purpose.

Then, the shrinkage of the sewn portion (sewing yarns) may preferably be substantially equal to that of the felt material. When the shrinkage of the sewn portion is large, ruffled wrinkles will be generated during use, deteriorating the property of shaking off soot and dust, or the shrinkage of the sewing yarns makes the seam larger, causing the leakage of part of dust to the outside. On the other hand, when the shrinkage of the sewing yarns is extremely smaller than that of the felt material, some problems will occur, such as occurrence of seam loosening, which is not preferred.

Polyphenylene sulfide fibers are mainly used around 180°C. Thus it is also important that the bag filter of the present invention does not cause any substantial deformation by heat treatment at 180°C. The deformation during use may easily occur by the cutting of a felt material being unequal-sided or running diagonally to the scrim warps, or in the case where the shrinkage rate of sewing yarns in the above-described bag filter is highly different from that of the felt material, or in the case where uneven tension (strain) remains in the preparation of a felt material, particularly at the time of heat setting. Since the shape of the bag filter greatly affects the property of shaking off (air permeability) as described above in detail, the diameter and length of the bag filter should not cause deformation of 3% or more even during use; therefore, a felt material and sewing fibers are used, which exhibit only a small dimensional change at about 180°C when heat treated in each step of processing.

Then, the fineness of short fibers used in the felt material according to the present invention greatly affects the filtering property. Short fibers with a smaller fiber diameter (small fineness) come to have a larger surface area (filtration area) and further a smaller gap between the fibers, which is preferred. When the short fibers are thick to excess, the passing of fibers in the step of carding will become deteriorated, or even in the step of needle punching or water punching, the degree of intertwining in the fibers will become decreased, which is not preferred. In general, short fibers may have a diameter of 30 $\mu$m or less. Further, since the particle diameter of soot and dust from the municipal refuse incinerators, although it depends on the incinerated refuse and incineration conditions, may widely vary ranging from 0.1 to 200 $\mu$m, fibers having a Y-, U-, V-, C-shaped or any other modified cross section, in addition to a round cross section, can be used to increase the surface area of the fibers. In the filtration using a bag filter, a soot and dust layer, called a primary dust layer, is first formed between the fibers of a felt material, which further improves the filtration performance, and dust is also stacked on the surface of the felt material to form a secondary dust layer, which deteriorates the air permeability; therefore, shaking off operation is carried out. The soot and dust to be shaken off are only in the secondary dust layer stacked on the surface of the bag filter, while the above primary dust layer is retained as such and dust filtration is continued.

The method of filtration may include various methods for soot and dust containing harmful substances, such as from the municipal refuse incinerators and industrial waste incinerators. They involve the addition of hydrated lime to remove HCl and $SO_x$; and the formation of a catalyst bed to remove $NO_x$ and the blowing of ammonia gas into the bed to cause reduction. Further, it is required by countermeasures against dioxin to reduce the temperature of exhaust gas in the filtration area to 200°C or lower, and water is usually added to rapidly cool the exhaust gas. For this reason, the soot and dust-containing gas attaches on filter cloth in a state where it contains the above unrecovered or unreacted HCl, $SO_x$ and $NO_x$, and additives, a large quantity of water, and unburned oil as part of the refuse or waste. Since there is an influence of dew condensation involved by shutdown or of deliquescence of calcium chloride, they may be difficult to come off, even by soot and dust shaking off operation. (The residual HCl, $SO_x$, $NO_x$ and the like are further rendered harmless by post-treatment.) For this purpose, it is also preferred that the felt material is subjected to water- and oil-repellent processing.

The felt material for use in the bag filter of the present invention is composed of a scrim as the support layer and a filter layer made of a short fiber aggregate, as described below in detail. The felt formation from short fibers can be achieved by stacking the short fibers with a card web or the like, followed by intertwining according to the needle punching method or water punching method. In the present invention, either of these methods can be employed. The method of stacking short fiber webs on the scrim is not particularly limited, but the degrees of orientation in the warp and weft directions can be changed.

Examples

The present invention will be further illustrated by some examples; however, the present invention is not limited to these examples.

The physical properties described in these examples were measured by the following methods.

The areal density is expressed as the weight per unit area according to JIS L1096 6.4.

Three samples of 20 cm x 20 cm in size are taken and measured for each absolute dry weight W'. The areal density is determined by the following equation:

$$\text{Areal density (g/m}^2) = \text{W' x (1 + R/100) x 1/A}$$

where W' is the absolute dry weight (g), R is the official moisture regain (%), and A is the area of a sample piece ($m^2$).

The thickness was measured according to JIS L1096 6.5.

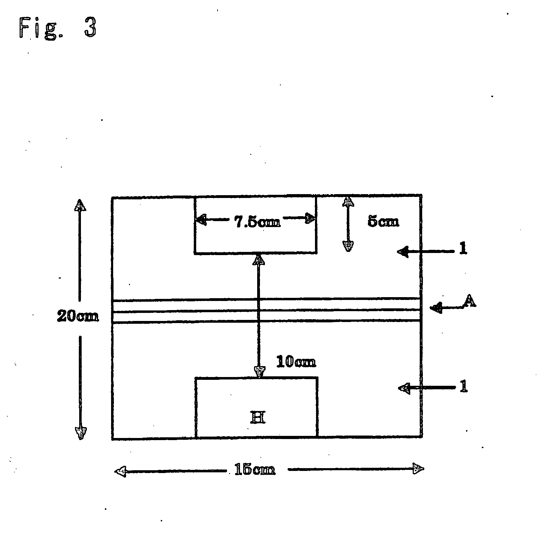

The strength of a felt material or a margin to seam was measured according to JIS L1096 6.12.1(2) method B (grab method). The sample was placed so that the margins to seam come substantially in the center and the length and the width are equal to 30 cm and 15 cm, respectively, as shown in Figure 3. The grip length (the overlapped portion plus 10 cm when the margin to seam is long) is adjusted to 20 cm with clamps H of 7.5 cm in width, and measurement is carried out by the constant rate of specimen extension method at an extension rate of 100%/min. The results are expresses as averages (N = 3). The strength of a felt material containing no sewn portion is also measured in the same manner so that the direction of the felt material is taken in the same direction. In the measurement of the strength of the sewn portion A in the actual tension test, there are two cases where the sewn portion A is broken and where the felt portion is ruptured, respectively. Further, in the breakage of the sewn portion, there are two cases where sewing yarns are ruptured and where the scrim in the sewn portion causes the slip breakage from the felt material, respectively. The higher strength in the tension test is in the following order: breakage of a felt material, rupture of sewing yarns, and slip breakage of the sewn portion.

Some pieces of filter cloth for bag filters were put into the actual bag filters in the back wash dust shaking off system. The filter cloth is 10 m in length. A bag was fixed so that 25 kg of tension was imposed on each bag, and dust-containing high-temperature and high-pressure gas was introduced into the inside of the cylindrical cloth for dust collection. The equipment conditions were as follows: temperature, 180°C; high furnace pressure, 2.0 kg/cm$^2$; and main gas components, $H_2$, $N_2$, CO, $CO_2$, and $H_2O$.

Example 1

A scrim was prepared by applying 70 (T/m) twists in double S-twisting to 250 dtex 60 filaments of PPS fibers (PROCON available from Toyo Boseki Kabushiki Kaisha) with a twisting machine, followed by plain weave of 23 yarns/2.54cm (yarns/inch) in the machine direction and 21 yarns/2.54cm (yarns/inch) in the transverse direction. For the short fibers to form a filter layer, 2.2 dtex 51 mm PPS short fibers (PROCON available from Toyo Boseki Kabushiki Kaisha) were used. The felt for a bag filter was prepared by the ordinary step of nonwoven fabric processing. The above short fibers subjected to primary opening were fed to a roller card for fine opening, followed by stacking of a web with a cross layer. These filter layers were integrated on the front and back faces of the scrim by the step of needle punching to give a felt having an areal density of 462 (g/m$^2$). The felt was pressed by calender rolls at 210°C so that it had a thickness of 1.8 mm. At that time, about 5% shrinkage was simultaneously caused in the widthwise direction to give a felt having an areal density of 508 (g/m$^2$) and a thickness of 1.82 (mm). This was followed by gas singeing the filtration surface to give a felt for a bag filter. The sewing yarns were prepared by applying 500 turns/meter (T/m) twists in S-twisting to 440 dtex PTFE fibers (Profilen available from Lenzing), combining four of the twisted yarn, and applying 360 turns/meter (T/m) twists in Z-twisting to the combined yarn. A bag filter having a diameter of 150 mm was prepared, in which the margin to seam was 20 mm (the ratio of margin to seam and bag circumference being 4.2%); super imposed seam was used; the number of stitches was 10 (times/3 cm); the number of sewing lines was 3; the intervals of sewing lines was 3 mm; and the number of warps of the scrim in the sewing lines was 6. The sewn portion was put into a grip gap, followed by the tension test, and the strength was found to be 87 daN. The strength of the original scrim was 83 daN.

Example 2

A scrim was prepared by using 440 dtex monofilament of PTFE fibers (Profilen available from Lenzing) and subjecting to 3-yarn plain weave of 29 yarns/2.54cm (yarns/inch) in the machine direction and 29 yarns/2.54cm (yarns/inch) in the transverse direction. For the short fibers to form a filter layer were used the same PPS fibers as in Example 1. A felt for a bag filter, having an areal density of 531 (g/m$^2$) and a thickness of 1.78 mm, was obtained by the integration of the filter layer and the scrim, calender roll treatment at 210°C, and gas singeing of the filtration surface in the same manner as in Example 1. Using the same PTFE sewing yarns as in Example 1, a bag filter having a diameter of 150 mm was prepared, in which the margin to seam was 15 mm (the ratio of margin to seam and bag circumference being 3.2%); super imposed seam was used; the number of stitches was 10 (times/3 cm); the number of sewing lines was 3; the intervals of sewing lines was 3 mm; and the number of warps of the scrim in the sewing lines was 8. The sewn portion was put into a grip gap, followed by the tension test, and the strength was found to be 58 daN. The strength of the original scrim was 64 daN.

Example 3

Using the same felt for a bag filter as in Example 1 and the same PTFE sewing yarns as in Example 1, a bag filter having a diameter of 320 mm was prepared, in which the margin to seam was 40 mm (the ratio of margin to seam and bag circumference being 4.0%); super imposed seam was used; the number of stitches was 10 (times/3 cm); the number of sewing lines was 4; the intervals of sewing lines was 3 mm; and the number of warps of the scrim in the sewing lines was 24. The sewn portion was put into a grip gap, followed by the tension test, and the strength was found to be 93 daN. The filter cloth was put into the actual bag filter in the back wash system.

Comparative Example 1

Using the same felt for a bag filter as in Example 1 and the same PTFE sewing yarns as in Example 1, a bag filter having a diameter of 150 mm was prepared, in which the margin to seam was 8 mm (the ratio of margin to seam and bag circumference being 1.7%); super imposed seam was used; the number of stitches was 10 (times/3 cm); the number of sewing lines was 3; the intervals of sewing lines was 2 mm; and the number of warps of the scrim in the sewing lines was 4. The sewn portion was put into a grip gap, followed by the tension test, and the sewing yarn were ruptured at 26 daN.

Comparative Example 2

A scrim was prepared by using the same PTFE fibers as in Example 1 and subjecting to plain weave of 15 yarns/2.54cm (yarns/inch) in the machine direction and 15 yarns/2,54 cm (yarns/inch) in the transverse direction. Using the same PPS short fibers for a filter layer as in Example 1, a felt for a bag filter, having an areal density of 483 (g/m$^2$) and a thickness of 1.82 mm, was obtained by the integration of the filter layer and the scrim, press by calender rolls at 210°C, and gas singeing of the filtration surface in the same manner as in Example 1. Using the same PTFE sewing yarns as in Example 1, a bag filter having a diameter of 150 mm was prepared, in which the margin to seam was 20 mm (the ratio of margin to seam and bag circumference being 4.2%); super imposed seam was used; the number of stitches was 10 (times/3 cm); the number of sewing lines was 3; the intervals of sewing lines was 4 mm; and the number of warps of the scrim in the sewing lines was 4. The sewn portion was put into a grip gap, followed by the tension test, and the sewn portion was broken at 41 daN.

Comparative Example 3

Using the same felt for a bag filter as in Example 1 and the same PTFE sewing yarns as in Example 1, a bag filter having a diameter of 150 mm was prepared, in which the margin to seam was 20 mm (the ratio of margin to seam and bag circumference being 4.2%); super imposed seam was used; the number of stitches was 10 (times/3 cm); the number of sewing lines was 2; the intervals of sewing lines was 4 mm; and the number of warps of the scrim in the sewing lines was 4. The sewn portion was put into a grip gap, followed by the tension test, and the strength of the sewn portion was 18 daN. The warps and wefts of the scrim were not ruptured, but slip breakage was caused from the cotton portion.

Comparative Example 4

A bag filter having a diameter of 400 mm was prepared in the same manner as in Example 3, and a filter cloth was put into the actual bag filter in the back wash system in the same manner as in Example 3.
For Examples 1 to 3 and Comparative Examples 1 to 4, the details of processing conditions and the results of the tension test are shown in Table 1.
As described above, for the bag filter having a diameter of 120 mm to 380 mm, which bag filter was prepared by sewing a rectangular felt material having an areal density of 400 (g/m$^2$) or more into a cylindrical shape, which felt material was obtained by the integration of short fibers containing polyphenylene sulfide fibers with a scrim, it was confirmed that Examples 1 to 3 exhibited very high values of strength in the tension test by putting them into a grip gap, in which Examples the margin to seam was 2% to 8% of the bag circumference and 5 or more warps of the scrim were contained in the sewing lines. On the other hand, slip breakage was found because of low strength in the sewn portion, in Comparative Example 1 with the ratio of margin to seam and bag circumference being less than 2%, in Comparative Example 2 with the weave density of the original scrim being small and the number of warps of the scrim in the sewing lines being consequently 4, and in Comparative Example 3 with the number of sewing lines being 2. In Example 3 and Comparative Example 4 where a filter cloth was put into a bag filter in the back wash dust shaking off system, slip breakage was caused in the sewn portion at the highest part of the filter cloth after use for about 6 months in Comparative Example 4, whereas good conditions were kept in Example 3. Therefore, it was estimated that Comparative Examples 1 to 4 outside the scope of the present invention have the possibility of slip breakage from the sewn portion by use for a long period.

TABLE 1

| | | | Example 1 | Example 2 | Example 3 | Comp. Ex. 1 | Comp. Ex. 2 | Comp. Ex. 3 | Comp. Ex. 4 |
|---|---|---|---|---|---|---|---|---|---|
| Bag filter diameter | | mm | 150 | 150 | 320 | 150 | 150 | 150 | 400 |
| Constitution | scrim | fiber | PPS | PTFE | PPS | PPS | PPS | PPS | PPS |
| | | type | multi-filament | mono-filament | multi-filament | multi-filament | multi-filament | multi-filament | multi-filament |
| | | dtex | 500 | 440 | 500 | 500 | 500 | 500 | 500 |
| | | weave density* (yarns/cm) | MD 9 (23) TD 8(21) | MD 11 (29) TD 11 (29) | MD 9 (23) TD 8 (21) | MD 9 (23) TD 8 (21) | MD 6 (15) TD 6 (15) | MD 9 (23) TD 8 (21) | MD 9 (23) TD 8 (21) |
| | filter layer | fiber | PPS | PPS | PPS | PPS | PPS | PPS | PPS |
| | | dtex | 2.2 | 2.2 | 2.2 | 2.2 | 2.2 | 2.2 | 2.2 |
| | | cut length mm | 51 | 51 | 51 | 51 | 51 | 51 | 51 |
| | sewing yarns | fiber | PTFE | PTFE | PTFE | PTFE | PTFE | PTFE | PTFE |
| Felt areal density | | g/m$^2$ | 508 | 531 | 420 | 508 | 483 | 508 | 420 |
| Felt thickness | | mm | 1.82 | 1.78 | 1.57 | 1.82 | 1.80 | 1.82 | 1.57 |
| *MD: machine direction TD: transverse direction | | | | | | | | | |

TABLE 1(contn'd)

| | | Example 1 | Example 2 | Example 3 | Comp. Ex. 1 | Comp. Ex. 2 | Comp. Ex. 3 | Comp. Ex. 4 |
|---|---|---|---|---|---|---|---|---|
| Sewn portion | margin in to seam mm | 20 | 15 | 40 | 8 | 20 | | 20 40 |
| | margin to seam/bag circumference x 100 % | 4.2 | 3.2 | 4.0 | 1.7 | 4.2 | 4.2 | 4.0 |
| | no. of warps in sewing lines | 6 | 8 | 24 | | 4 | 4 | 24 |
| | way of sewing | super imposed seam | super imposed seam | super imposed seam | super imposed seam | super imposed seam | super imposed | super imposed seam |
| | stitch | lock stitch | lock stitch | lock stitch | lock stitch | lock stitch | lock stitch | lock stitch |
| | no. of stitches /3 cm | 10 | 10 | 10 | 10 | 10 | 10 | 10 |
| | no. of sewing lines | 3 | 3 | 4 | 3 | 3 | 2 | 4 |
| | interval of sewing lines mm | 3.0 | 3.0 | 8.0 | 2.0 | 3.0 | 4.0 | 8.0 |
| Tension test | broken part | felt material | felt material | felt material | sewn portion breakage | sewn portion breakage | sewn portion slip breakage | felt material |
| | strength        daN | 87 | 68 | 93 | 26 | 41 | 18 | 93 |
| Actual evaluation (in the back wash system) | | - | - | good | - | - | - | sewn portion slip breakage |
| Total evaluation | | ○ | ○ | ○ | × | × | × | × |

EP 1 302 229 B2

Effects of the Invention

According to the present invention, it has made possible to provide a bag filter which can endure use for a long period by improving the strength and durability of the bag filter, particularly in its sewn portion, which is continuously operated at high temperatures for a long period, such as in the incinerator for municipal refuse and industrial waste, to filter dust-containing gases.

**Claims**

1. A bag filter comprising a felt material (2) with an areal density of 400 g/m$^2$ or more, which felt material (2) is prepared by bonding a short fiber web composed mainly of polyarylene sulfide fibers with a scrim and is sewn into a cylindrical shape having a diameter of 120 mm to 380 mm, a margin to seam being 2% to 8% of the bag circumference, and at least five yarns of the scrim in either one of warp and weft directions being incorporated by sewing into the entire sewn portion of the margin to seam, wherein the sewn portion comprises at least three lines of sewing at an interval of 2 mm or more.

2. The bag filter according to claim 1, wherein the sewing lines are substantially parallel to the center line of the cylindrical shape of the bag filter.

3. The bag filter according to claim 1 or 2, wherein the sewing yarns (1) are composed substantially of fluorocarbon fibers or polyarylene sulfide fibers.

**Patentansprüche**

1. Filtertasche mit einem Filzmaterial (2) mit einer Flächendichte von 400 g/m$^2$ oder mehr, wobei das Filzmaterial (2) durch Verbinden eines Kurzfasergewebes, das hauptsächlich aus Polyarylensulfidfasern besteht, mit einem Gittergewebe hergestellt ist und zu einer zylindrischen Form mit einem Durchmesser von 120 mm bis 380 mm genäht ist, wobei ein Saum zur Naht 2 % bis 8 % des Taschenumfangs beträgt und mindestens fünf Fäden des Gittergewebes in der Kett- oder Schussrichtung durch Einnähen in den gesamten genähten Abschnitt des Saums zur Naht einbezogen sind, wobei der genähte Abschnitt mindestens drei Nahtlinien in einem Intervall von 2 mm oder mehr aufweist.

2. Filtertasche nach Anspruch 1, wobei die Nahtlinien im wesentlichen parallel zur Mittellinie der zylindrischen Form der Filtertasche sind.

3. Filtertasche nach Anspruch 1 oder 2, wobei die Nähfäden (1) im wesentlichen aus Fluorkohlenstofffasern oder Polyarylensulfidfasern bestehen.

**Revendications**

1. Filtre à manche comprenant un matériau en feutre (2) avec une densité de surface de 400 g/m$^2$ ou plus, lequel matériau en feutre (2) est préparé en reliant une courte bande en fibres composée principalement de fibres de sulfure de polyarylène avec un canevas et est cousue selon une forme cylindrique ayant un diamètre de 120 mm à 380 mm, la marge de couture representant de 2% à 8% de la circonférence de la manche, et au moins cinq fils du canevas dans chacune des directions de chaîne et de trame étant incorporés en cousant dans toute la partie cousue de la marge de couture, dans lequel la partie cousue comprend au moins trois lignes de couture à un intervalle de 2 mm ou plus.

2. Filtre à manche selon la revendication 1, dans lequel les lignes de couture sont sensiblement parallèles à la ligne centrale de la forme cylindrique du filtre à manche.

3. Filtre à manche selon la revendication 1 ou 2, dans lequel les fils (1) de couture sont sensiblement composés de fibres de fluorocarbure ou des fibres de sulfure de polyarylène.

Fig. 1

Fig. 2

(a)

(b)

Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0916379 A

- US 3354129 A